(19) Europäisches Patentamt
European Patent Office
Office européen des brevets

(11) **EP 4 191 725 A1**

(12) **EUROPEAN PATENT APPLICATION**
published in accordance with Art. 153(4) EPC

(43) Date of publication:
**07.06.2023 Bulletin 2023/23**

(21) Application number: **20952807.4**

(22) Date of filing: **11.09.2020**

(51) International Patent Classification (IPC):
**H01M 10/0525** (2010.01)    **H01M 4/36** (2006.01)

(52) Cooperative Patent Classification (CPC):
**Y02P 70/50**

(86) International application number:
**PCT/CN2020/114670**

(87) International publication number:
**WO 2022/052019 (17.03.2022 Gazette 2022/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited**
**Ningde, Fujian 352100 (CN)**

(72) Inventors:
• ZHANG, Yafei
  Ningde, Fujian 352100 (CN)
• JIANG, Chenxi
  Ningde, Fujian 352100 (CN)
• YU, Hongming
  Ningde, Fujian 352100 (CN)
• XIE, Yuansen
  Ningde, Fujian 352100 (CN)

(74) Representative: **Icosa**
**83 avenue Denfert-Rochereau**
**75014 Paris (FR)**

(54) **ELECTROCHEMICAL DEVICE AND ELECTRONIC DEVICE**

(57)    This application provides an electrochemical apparatus and an electronic apparatus. The electrochemical apparatus includes: a positive electrode plate, a negative electrode plate, and a separator disposed between the positive electrode plate and the negative electrode plate, where the negative electrode plate includes a negative electrode current collector and a negative electrode active substance layer disposed on the negative electrode current collector, where the electrochemical apparatus has a first capacity b in the unit of mAh, the first capacity a is greater than 0, and the first capacity a represents a capacity when a battery that is prepared using the negative electrode plate and a lithium plate as a counter electrode of the negative electrode plate is charged to 2.0 V after the electrochemical apparatus has been discharged from a 100% state of charge (SOC) to 2.5 V The solution of this application is conducive to alleviating capacity decay of the electrochemical apparatus after cycling and improving cycling performance of the electrochemical apparatus.

FIG. 2

EP 4 191 725 A1

**Description**

**TECHNICAL FIELD**

This application relates to the field of electronic technologies, and in particular, to an electrochemical apparatus and an electronic apparatus.

**BACKGROUND**

With the development and advancement of electrochemical apparatuses (for example, lithium-ion batteries), increasingly high requirements are placed on cycling performance of electrochemical apparatuses. As the charge-discharge cycle of electrochemical apparatuses increases, cycling capacity of electrochemical apparatuses tends to decrease continuously. An important direction to improve cycling performance of electrochemical apparatuses is to alleviate capacity decay of electrochemical apparatuses after cycling.

**SUMMARY**

According to this application, excess lithiation is performed on an electrochemical apparatus, which not only compensates for loss of active lithium in an initial lithium-intercalation process and improves first-cycle efficiency of the electrochemical apparatus, but also alleviates capacity decay of the electrochemical apparatus in a cycling process, further improving cycling performance of the electrochemical apparatus.

An embodiment of this application provides an electrochemical apparatus, including: a positive electrode plate, a negative electrode plate, and a separator disposed between the positive electrode plate and the negative electrode plate, where the negative electrode plate includes a negative electrode current collector and a negative electrode active substance layer disposed on the negative electrode current collector, where the electrochemical apparatus has a first capacity a in the unit of mAh, the first capacity a is greater than 0, and the first capacity a represents a capacity when a battery that is prepared using the negative electrode plate and a lithium plate as a counter electrode of the negative electrode plate is charged to 2.0 V after the electrochemical apparatus has been discharged from a 100% state of charge (SOC) to 2.5 V

In the foregoing electrochemical apparatus, the electrochemical apparatus further has a second capacity b in the unit of mAh, the second capacity b represents a capacity when the electrochemical apparatus is discharged from a 100% state of charge to 2.5 V, and the electrochemical apparatus satisfies a relation (1):

$$0 < a/b < 0.5 \qquad (1).$$

In the foregoing electrochemical apparatus, the electrochemical apparatus further has a third capacity c in the unit of mAh, the third capacity c represents a capacity when a battery that is prepared using the negative electrode plate and a lithium plate as a counter electrode of the negative electrode plate is charged to 2.0 V and discharged to a 0% state of charge of the battery after the electrochemical apparatus has been discharged from a 100% state of charge to 2.5 V, and the electrochemical apparatus satisfies a relation (2): $1.05 < c/(a+b) < 1.6$ (2).

In the foregoing electrochemical apparatus, the electrochemical apparatus further satisfies a relation (3): $0.03 < (c-b)/b < 0.5$ (3).

In the foregoing electrochemical apparatus, a negative electrode active substance in the negative electrode active substance layer includes at least one of artificial graphite, natural graphite, meso-carbon microbeads, soft carbon, hard carbon, lithium titanate, silicon, a silicon alloy, a silicon-oxygen compound, or a silicon-carbon composite.

In the foregoing electrochemical apparatus, a chemical formula of the silicon-oxygen compound is $SiO_x$, where $0.5 \leq x \leq 1.5$.

In the foregoing electrochemical apparatus, a mass percentage of a negative electrode active substance in the negative electrode active substance layer is 80% to 99%.

In the foregoing electrochemical apparatus, a conductive layer is disposed between the negative electrode current collector and the negative electrode active substance layer, and the conductive layer includes a conductive agent and a binder.

In the foregoing electrochemical apparatus, the conductive agent includes at least one of carbon black, acetylene black, Ketjen black, graphene, carbon nanotubes, carbon fibers, or carbon nanowires.

An embodiment of this application further provides an electronic apparatus, including the foregoing electrochemical apparatus.

In this application, through excess lithiation, the electrochemical apparatus has the first capacity a, where the first capacity a represents a capacity when a battery that is prepared using the negative electrode plate and a lithium plate as a counter electrode of the negative electrode plate is charged to 2.0 V after the electrochemical apparatus has been discharged from a 100% state of charge (SOC) to 2.5 V, and the first capacity a is greater than 0. In this way, the first-cycle efficiency of the electrochemical apparatus can be improved, and lithium can be continuously supplemented as lithium ions from the positive electrode plate are consumed, thereby alleviating capacity decay of the electrochemical apparatus after cycling and improving cycling performance of the electrochemical apparatus.

**BRIEF DESCRIPTION OF DRAWINGS**

FIG. 1 is a schematic diagram of normal lithiation.
FIG. 2 is a schematic diagram of excess lithiation according to an embodiment of this application.
FIG. 3 is a schematic diagram of an electrode assembly of an electrochemical apparatus according to an embodiment of this application.
FIG. 4 is a schematic structural diagram of a negative electrode plate according to an embodiment of this application.
FIG. 5 is a schematic structural diagram of a negative electrode plate according to another embodiment of this application.

**DESCRIPTION OF EMBODIMENTS**

The following embodiments may help persons skilled in the art to understand this application more comprehensively, but do not limit this application in any manner.

Currently, increasingly high requirements are placed on energy density and cycling performance of electrochemical apparatuses (for example, lithium-ion batteries). As the charge-discharge cycle of electrochemical apparatuses increases, cycling capacity of electrochemical apparatuses tends to decrease continuously. An important direction to improve cycling performance of electrochemical apparatuses is to alleviate capacity decay of electrochemical apparatuses after cycling.

In addition, first-cycle efficiency of the electrochemical apparatus is also an important performance index. If both the first-cycle efficiency and cycling performance of the electrochemical apparatus can be improved, performance of the electrochemical apparatus can be greatly improved. This is a challenge for both conventional negative electrode active substances and promising silicon-based materials, especially for silicon-based materials.

Silicon-based materials have become the most promising high-capacity negative electrode active substances by virtue of the high gram capacity. However, as a negative electrode active substance of the electrochemical apparatus, the silicon-based material faces problems such as poor cycling performance and large volume swelling. A theoretical gram capacity of pure silicon can be as high as 4200 mAh/g, and volume swelling of pure silicon particles is up to 300% when pure silicon is fully intercalated. Delithiation and lithiation of silicon particles may cause huge particle swelling and contraction, which can damage a solid electrolyte interface film (SEI film) that has been formed on the surface of the particle, exposing active silicon elements. The exposed active silicon elements consume electrolyte and active lithium during the subsequent charging process so that a new SEI film is formed. The cycling of such process accelerates consumption of the electrolyte on the silicon surface, and also leads to consumption of the active lithium, thus accelerating the decrease of the cycling capacity retention rate of the electrochemical apparatus and deteriorating the cycling performance of the electrochemical apparatus.

To alleviate capacity decay of the electrochemical apparatus including the silicon-based material after cycling, some additives capable of promoting formation of an SEI film may be added into the electrolyte to help form a more stable SEI film on the surface of the negative electrode active substance, which avoids damage to the SEI film of the negative electrode active substance caused by the SEI film's inability of withstanding large swelling and contraction during charge and discharge, thereby improving the cycling performance of the electrochemical apparatus. Fluoroethylene carbonate (FEC) is an effective negative electrode film-forming additive. However, FEC may decompose on the silicon surface to produce HF and $H_2$. Especially when lithium salt in the electrolyte is $LiPF_6$ and $H_2O$ is present in the electrolyte, such reaction is accelerated. The HF present in the electrolyte deteriorates a solid electrolyte film on the surface of a positive electrode active substance, so that high-temperature cycling performance of the electrochemical apparatus drops sharply.

Currently, commonly used silicon-based materials mainly include a silicon-oxygen material and a silicon-carbon material, both of which have a problem of low first-cycle efficiency. For example, for the silicon-oxygen material, lithium oxide is formed in an initial lithium-intercalation process, and the SEI film is also formed in this process, causing a large amount of lithium to lose activity so that the first-cycle efficiency of the electrochemical apparatus is reduced. A first-cycle efficiency of the electrochemical apparatus that uses the silicon-oxygen material as the negative electrode active substance is about 70%, and a first-cycle efficiency of the electrochemical apparatus that uses the silicon-carbon material as the negative electrode active substance is about 80% to 90%, much lower than that of a graphite negative electrode system, affecting extractable specific capacity of the silicon-based material.

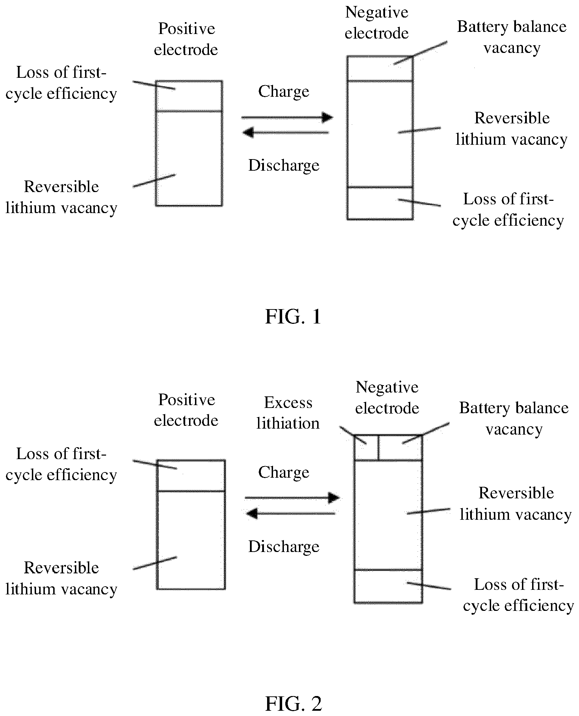

To improve the first-cycle efficiency of the electrochemical apparatus that includes the silicon-based material, pre-lithiation may be performed for the silicon-based material. As shown in FIG. 1, generally pre-lithiation is to provide an additional lithium source for compensating for consumption of active lithium in an initial lithium-intercalation process of the silicon-based material, thereby reducing the consumption of the active lithium from the positive electrode and improving the first-cycle efficiency of the electrochemical apparatus. Compared with a technical solution without pre-lithiation, such technical solution can effectively improve the first-cycle efficiency of the electrochemical apparatus that uses the silicon-based material as the negative electrode active substance, but cannot improve the cycling performance of the electrochemical apparatus. As shown in FIG. 2, in this application, excess lithiation is performed on the negative electrode active substance (for example, a silicon-based material) to alleviate capacity decay of the electrochemical apparatus after cycling, thereby improving the cycling performance of the electrochemical apparatus. That means the amount of supplemented lithium during lithiation can compensate for consumption of active lithium in the initial lithium-intercalation process of the negative electrode active substance, and a part of supplemented lithium is also reserved in the negative electrode active substance. The part of excessively supplemented lithium serves as a reserve for compensating for lithium consumed during the cycle of the negative electrode active substance. In addition, the amount of supplemented lithium is accurately controlled so that the electrochemical apparatus does not have lithium precipitation or significant reduction in energy density.

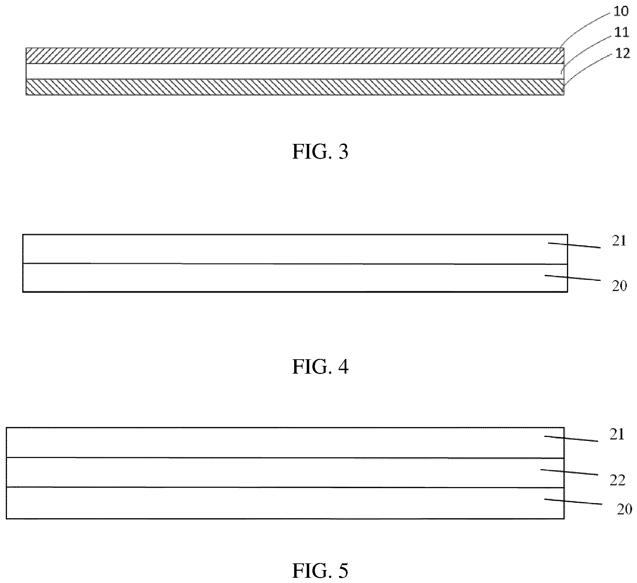

As shown in FIG. 3, a schematic diagram of an electrochemical apparatus according to this application is provided. The electrochemical apparatus includes a positive electrode plate 10, a negative electrode plate 12, and a separator 11 disposed between the positive electrode plate 10 and the negative electrode plate 12. As shown in FIG. 4, the negative electrode plate 12 may include a negative electrode current collector 20 and a negative electrode active substance layer 21 disposed on the negative electrode current collector 20. It should be understood that although in FIG. 4, the negative electrode active substance layer 21 is provided on one side of the negative electrode current collector 20, this is merely an example, and both sides of the negative electrode current collector 20 may be provided with a negative electrode active substance layer.

In some embodiments, the electrochemical apparatus has a first capacity a in the unit of mAh, the first capacity a is greater than 0, and the first capacity a represents a capacity when a battery that is prepared using the negative electrode plate and a lithium plate as a counter electrode of the negative electrode plate is charged to 2.0 V after the electrochemical apparatus has been discharged from a 100% state of charge (SOC) to 2.5 V In this application, the first capacity a of the electrochemical apparatus is greater than 0, which is implemented through excess lithiation. Excess lithiation may be implemented in various ways, including but not limited to excess lithiation through a negative electrode, excess lithiation through a positive electrode, excess lithiation through the separator, and excess lithiation through the electrolyte, as long as the electrochemical apparatus has a first capacity a that is greater than 0. In this way, not only the first-cycle efficiency of the electrochemical apparatus can be improved, but also the capacity decay of the electrochemical apparatus after cycling can be alleviated, thereby improving the cycling performance of the electrochemical apparatus. In some embodiments, capacity of excess lithiation in FIG. 2 corresponds to the first capacity a. It should be noted that in a process of preparing a battery by using the negative electrode plate and a lithium plate as a counter electrode of the negative electrode plate, the whole negative electrode plate needs to be used as an electrode therein. If the negative electrode plate is excessively large, a small part may be cut from the negative electrode plate and made into a battery together with the lithium plate, and then equal-proportion conversion is carried out.

In some embodiments, the electrochemical apparatus further has a second capacity b in the unit of mAh, where the second capacity b represents a capacity when the electrochemical apparatus is discharged from a 100% state of charge to 2.5 V, and the electrochemical apparatus satisfies a relation (1):

$$0 < a/b < 0.5 \qquad (1).$$

If a/b is excessively large, for example, greater than or equal to 0.5, the energy density of the electrochemical apparatus is adversely affected, leading to decreased energy density of the electrochemical apparatus. Preferably, $0.05 < a/b < 0.3$, and more preferably $0.05 < a/b < 0.15$. In some embodiments, capacity of reversible lithium vacancies in FIG. 2 corresponds to the second capacity b.

In some embodiments, the electrochemical apparatus further has a third capacity c in the unit of mAh, where the third capacity c represents a capacity when a battery that is prepared using the negative electrode plate and the lithium plate as a counter electrode of the negative electrode plate is charged to 2.0 V and discharged to a 0% state of charge of the battery after the electrochemical apparatus has been discharged from a 100% state of charge to 2.5 V, and the electrochemical apparatus satisfies a relation (2):

$$1.05 < c/(a+b) < 1.6 \quad (2).$$

If $c/(a+b)$ is excessively large, for example, greater than or equal to 1.6, the energy density of the electrochemical apparatus is adversely affected. Preferably, $1.11 < c/(a+b) < 1.3$, and more preferably $1.12 < c/(a+b) < 1.25$. In some embodiments, a total capacity of the excess lithiation capacity, battery balance vacancy capacity, and reversible lithium vacancy capacity in FIG. 2 corresponds to the third capacity c, that is, c=a+b+battery balance vacancy capacity.

In some embodiments, the electrochemical apparatus further satisfies a relation (3):

$$0.03 < (c-b)/b < 0.5 \quad (3).$$

If $(c-b)/b$ is excessively large, for example, greater than or equal to 0.5, the energy density of the electrochemical apparatus is adversely affected.

In some embodiments, for the negative electrode current collector, at least one of copper foil, nickel foil, or carbon-based current collectors may be used. In some embodiments, the negative electrode active substance layer may include a negative electrode active substance. In some embodiments, the negative electrode active substance in the negative electrode active substance layer includes at least one of artificial graphite, natural graphite, meso-carbon microbeads, soft carbon, hard carbon, lithium titanate, silicon, a silicon alloy, a silicon-oxygen compound, or a silicon-carbon composite. In some embodiments, a chemical formula of the silicon-oxygen compound is $SiO_x$, where $0.5 \leq x \leq 1.5$. In some embodiments, the negative electrode active substance includes at least one of a silicon-oxygen compound, silicon, a silicon alloy, or a silicon-carbon composite. In other words, the negative electrode active substance layer is a negative electrode active substance layer including the silicon-based material.

In some embodiments, the negative electrode active substance layer may further include a conductive agent and/or a binder. The conductive agent in the negative electrode active substance layer may include at least one of carbon black, acetylene black, Ketjen black, lamellar graphite, graphene, carbon nanotubes, carbon fibers, or carbon nanowires. In some embodiments, the binder in the negative electrode active substance layer may include at least one of carboxymethyl cellulose (CMC), polyacrylic acid, polyacrylic acid salt, polyacrylate, polyvinylpyrrolidone, polyaniline, polyimide, polyamideimide, silicone oil, styrene butadiene rubber, phenolic epoxy resin, polyester resin, polyurethane resin, or polyfluorene. It should be understood that the materials disclosed above are merely examples, and any other suitable material may be used for the negative electrode active substance layer. In some embodiments, a mass ratio of the negative electrode active substance, the conductive agent, and the binder in the negative electrode active substance layer may be 80-99:0.5-10:0.5-10. In some embodiments, a mass percentage of the negative electrode active substance in the negative electrode active substance layer is 80% to 99%. The negative electrode active substance accounting for such mass percentage can maximize the energy density of the electrochemical apparatus, and compensate for the energy density loss caused by excess lithiation to some extent.

In some embodiments, as shown in FIG. 5, a conductive layer 22 is disposed between the negative electrode current collector 20 and the negative electrode active substance layer 21, and the conductive layer 22 includes a conductive agent and a binder. The conductive layer 22 being disposed between the negative electrode current collector 20 and the negative electrode active substance layer 21 can buffer the stress caused by swelling or contraction of the negative electrode active substance layer, and can also enhance the adhesion between the negative electrode active substance layer and the negative electrode current collector to prevent the negative electrode active substance layer from falling off the negative electrode current collector. In some embodiments, the conductive agent in the conductive layer 22 includes at least one of carbon black, acetylene black, Ketjen black, graphene, carbon nanotubes, carbon fibers, or carbon nanowires. In some embodiments, the binder in the conductive layer 22 may include at least one of carboxymethyl cellulose (CMC), polyacrylic acid, polyacrylic acid salt, polyacrylate, polyvinylpyrrolidone, polyaniline, polyimide, polyamideimide, silicone oil, styrene butadiene rubber, phenolic epoxy resin, polyester resin, polyurethane resin, or polyfluorene. Other appropriate conductive agents and binders may also be used.

In some embodiments, the positive electrode plate 10 includes a positive electrode current collector and a positive electrode active substance layer disposed on the positive electrode current collector. The positive electrode active substance layer may be located on one or two sides of the positive electrode current collector. In some embodiments, the positive electrode current collector may be made of an aluminum foil. Certainly, other positive electrode current collectors commonly used in the prior art may also be used. In some embodiments, thickness of the positive electrode current collector may be 1 μm to 200 μm. In some embodiments, the positive electrode active substance layer may be applied on only part of the positive electrode current collector. In some embodiments, thickness of the positive electrode active substance layer may be 10 μm to 500 μm. It should be understood that the descriptions above are merely examples, and any other suitable thickness may be adopted.

In some embodiments, the positive electrode active substance layer includes a positive electrode active substance. In some embodiments, the positive electrode active substance may include at least one of lithium cobaltate, lithium manganate, lithium iron phosphate, lithium iron manganese phosphate, lithium nickel cobalt manganate, lithium nickel cobalt aluminate, or lithium nickel manganate, and the positive electrode active substance may undergo doping and/or coating processing. In some embodiments, the positive electrode active substance layer further includes a binder and a conductive agent. In some embodiments, the binder in the positive electrode active substance layer may include at least one of polyvinylidene fluoride, a vinylidene fluoride-hexafluoropropylene copolymer, a styrene-acrylate copolymer, a styrene-butadiene copolymer, polyamide, polyacrylonitrile, a polyacrylic ester, polyacrylic acid, a polyacrylic salt, carboxyl methyl cellulose, polyvinyl acetate, polyvinylpyrrolidone, polyvinylether, polymethyl methacrylate, polytetrafluoroethylene, or polyhexafluoropropylene. In some embodiments, the conductive agent in the positive electrode active substance layer may include at least one of conductive carbon black, acetylene black, Ketjen black, lamellar graphite, graphene, carbon nanotubes, or carbon fibers. In some embodiments, a mass ratio of the positive electrode active substance, the conductive agent, and the binder in the positive electrode active substance layer may be 70-98:1-15:1-15. It should be understood that the descriptions above are merely examples, and any other suitable materials, thicknesses, and mass ratios may be adopted for the positive electrode active substance layer.

In some embodiments, the separator 11 includes at least one of polyethylene, polypropylene, polyvinylidene fluoride, polyethylene terephthalate, polyimide, or aramid. For example, polyethylene is selected from at least one of high-density polyethylene, low-density polyethylene, or ultra-high molecular weight polyethylene. Especially, polyethylene and polypropylene have a good effect on preventing short circuits, and can improve stability of a battery through a shutdown effect. In some embodiments, thickness of the separator approximately ranges from 3 $\mu$m to 500 $\mu$m.

In some embodiments, the surface of the separator may further include a porous layer disposed on at least one surface of the separator, the porous layer includes at least one of inorganic particles or a binder, and the inorganic particles are selected from at least one of aluminum oxide ($Al_2O_3$), silicon oxide ($SiO_2$), magnesium oxide (MgO), titanium oxide ($TiO_2$), hafnium dioxide ($HfO_2$), tin oxide ($SnO_2$), cerium dioxide ($CeO_2$), nickel oxide (NiO), zinc oxide (ZnO), calcium oxide (CaO), zirconium oxide ($ZrO_2$), yttrium oxide ($Y_2O_3$), silicon carbide (SiC), boehmite, aluminum hydroxide, magnesium hydroxide, calcium hydroxide, or barium sulfate. In some embodiments, a pore of the separator has a diameter ranging from approximately 0.01 $\mu$m to 1 $\mu$m. The binder of the porous layer is selected from at least one of polyvinylidene fluoride, vinylidene fluoride-hexafluoropropylene copolymer, polyamide, polyacrylonitrile, polyacrylate, polyacrylic acid, polyacrylate, sodium carboxymethylcellulose, polyvinylpyrrolidone, polyvinyl ether, polymethyl methacrylate, polytetrafluoroethylene, or polyhexafluoropropylene. The porous layer on the surface of the separator can improve heat resistance, oxidation resistance, and electrolyte infiltration performance of the separator, and enhance adhesion between the separator and the electrode plate.

In some embodiments of this application, an electrode assembly of the electrochemical apparatus is a wound electrode assembly or a stacked electrode assembly.

In some embodiments, the electrochemical apparatus is a lithium-ion battery, but this application is not limited thereto. In some embodiments, the electrochemical apparatus may further include an electrolyte. The electrolyte may be one or more of gel electrolyte, solid electrolyte, and liquid electrolyte, and the liquid electrolyte includes a lithium salt and a non-aqueous solvent. The lithium salt is selected from one or more of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoro borate. For example, $LiPF_6$ is selected as the lithium salt because it can provide a high ionic conductivity and improve the cycling performance.

The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

Instances of the linear carbonate compound are diethyl carbonate (DEC), dimethyl carbonate (DMC), dipropyl carbonate (DPC), methyl propyl carbonate (MPC), ethylene propyl carbonate (EPC), ethyl methyl carbonate (MEC), or combinations thereof. Instances of the cyclic carbonate compound are ethylene carbonate (EC), propylene carbonate (PC), butylene carbonate (BC), vinyl ethylene carbonate (VEC), or combinations thereof. Instances of the fluorocarbonate compound are fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or combinations thereof.

Instances of the carboxylate compound are methyl acetate, ethyl acetate, n-propyl acetate, tert-butyl acetate, methyl propionate, ethyl propionate, propyl propionate, $\gamma$-butyrolactone, decanolide, valerolactone, mevalonolactone, caprolactone, methyl formate, or combinations thereof.

Instances of the ether compound are dibutyl ether, tetraglyme, diglyme, 1,2-dimethoxyethane, 1,2-diethoxyethane, ethoxymethoxy ethane, 2-methyltetrahydrofuran, tetrahydrofuran, or combinations thereof.

Instances of the another organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or combinations thereof.

In some embodiments of this application, taking a lithium-ion battery as an example, a positive electrode plate, a separator, and a negative electrode plate are wound together or stacked in sequence to form an electrode assembly that is then loaded into, for example, an aluminum-plastic filmed housing for packaging, followed by electrolyte injection, formation and packaging, to obtain a lithium-ion battery. Then, a performance test is performed on the prepared lithium-ion battery.

Those skilled in the art will understand that the method for preparing the electrochemical apparatus (for example, the lithium-ion battery) described above is only an embodiment. Without departing from the content disclosed in this application, other methods commonly used in the art may be used.

An embodiment of this application further provides an electronic apparatus including the foregoing electrochemical apparatus. The electronic apparatus in this embodiment of this application is not particularly limited, and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, and a lithium-ion capacitor.

Some specific examples and comparative examples are listed below to better illustrate this application. Lithium-ion batteries are used for illustration.

Example 1

Preparation of positive electrode plate: A positive electrode active substance lithium cobaltateare, a conductive agent conductive carbon black, and a binder polyvinylidene fluoride were dissolved in an N-methylpyrrolidone (NMP) solution at a weight ratio 97:1.4:1.6, to obtain a positive electrode slurry. An aluminum foil was used as a positive electrode current collector. The positive electrode paste was applied on the positive electrode current collector at a coating weight of 17.2 mg/cm$^2$. After drying, cold pressing, and cutting, a positive electrode plate was obtained.

Preparation of negative electrode plate: A negative electrode active substance was a silicon-oxygen material (SiO). The negative electrode active substance, polyacrylate, conductive carbon black, and sodium carboxymethyl cellulose were dissolved in deionized water at a weight ratio of 94.8:4.0:0.2:1.0 to form a slurry for negative electrode active substance layer, where a weight percentage of silicon was 10%. A copper foil with a thickness of 10 μm was used as a negative electrode current collector, and the negative electrode active substance layer paste was applied on the negative electrode current collector at a coating weight of 6.27 mg/cm$^2$, followed by drying, until a water content of the negative electrode plate was less than or equal to 300 ppm, to obtain a negative electrode active substance layer. Then, a lithium plate of 0.36 mg/cm$^2$ was calendered onto the negative electrode active substance layer. Cutting is performed to obtain a negative electrode plate.

Preparation of separator: A polyethene (PE) substrate with a thickness of 8 μm was used as the separator, two sides of the separator were each coated with a 2 μm-thick aluminum oxide ceramic layer, and finally, the two sides coated with the ceramic layers were each coated with polyvinylidene fluoride (PVDF), with a coating weight of 2.5 mg/cm$^2$, followed by drying.

Preparation of electrolyte: In an environment with a water content less than 10 ppm, lithium hexafluorophosphate and a non-aqueous organic solvent (a weight ratio of ethylene carbonate (EC), diethyl carbonate (DEC), propylene carbonate (PC), propyl propionate (PP), and vinylene carbonate (VC) was 20:30:20:28:2) were mixed at a weight ratio of 8:92 to prepare the electrolyte.

Preparation of lithium-ion battery: The positive electrode plate, the separator, and the negative electrode plate were stacked in sequence, so that the separator was disposed between the positive electrode plate and the negative electrode plate for separation, and winding was performed to obtain an electrode assembly. The electrode assembly was put in an outer package aluminum-plastic film, and was dehydrated at 80°C. Then, the foregoing electrolyte was injected and packaging was performed, followed by processes such as formation, degassing, and trimming to obtain a lithium-ion battery.

Examples 2 to 10 and comparative examples 1 and 2 have parameters changed on a basis of the steps in Example 1, and specific changed parameters are shown in Table 1 and Table 2 below.

The following describes methods for testing various parameters in this application.

Cycling performance test:

In a 25°C±2°C thermostat, the lithium-ion battery was charged to 4.45 V at a 0.5C constant current, charged to 0.05C at a 4.45 V constant voltage, and then left there resting for 15 minutes; then, the lithium-ion battery was discharged to 3.0 V at the 0.5C constant current, and was left there resting for 5 minutes. This was one charge and discharge cycle process. The first cycle discharge capacity was defined as 100%. The charge-discharge cycle process was repeated, and capacity retention rates after 200 cycles and 400 cycles were recorded as indicators for evaluating cycling performance of the lithium-ion battery.

Method for testing energy density:

The lithium-ion battery was placed in a 25°C±2°C thermostat and left there resting for 30 minutes so that the lithium-ion battery reached a constant temperature. The lithium-ion battery that had reached a constant temperature was charged at a constant current of 0.5C to a voltage of 4.4 V, then charged at a constant voltage of 4.4 V to a current of 0.05C, and discharged at 0.5C to a voltage of 3.0 V A discharge capacity at that point was recorded.

Energy density=discharge capacity/(length×width×thickness of the lithium-ion battery).

Table 1 shows parameters and evaluation results in Examples 1 to 7 and Comparative Examples 1 to 3.

## Table 1

| Number | Capacity a (mAh) | Capacity b (mAh) | Capacity c (mAh) | c/(a+b) | (c−b)/b | a/b | Coating weight for negative electrode (mg/cm$^2$) | Size of lithium plate (mg/cm$^2$) | Capacity retention rate after 200 cycles (%) | Capacity retention rate after 400 cycles (%) | Energy density (J/cm$^3$) |
|---|---|---|---|---|---|---|---|---|---|---|---|
| Example 1 | 334.8 | 3348 | 4051.0 | 1.1 | 0.21 | 0.1 | 6.27 | 0.36 | 97% | 95% | 714 |
| Example 2 | 319.7 | 3197 | 4220.0 | 1.2 | 0.32 | 0.1 | 6.54 | 0.37 | 98% | 96% | 681 |
| Example 3 | 639.4 | 3197 | 4220.0 | 1.1 | 0.31 | 0.2 | 6.54 | 0.47 | 97.3% | 95.4% | 681 |
| Example 4 | 917.4 | 3058 | 4373.0 | 1.1 | 0.43 | 0.3 | 6.78 | 0.56 | 97.7% | 95.9% | 652 |
| Example 5 | 1173 | 2999 | 4515.0 | 1.1 | 0.54 | 0.4 | 6.99 | 0.7 | 98% | 96.2% | 635 |
| Example 6 | 609 | 3046 | 4386.0 | 1.2 | 0.44 | 0.2 | 6.79 | 0.47 | 98.2% | 96.3% | 649 |
| Example 7 | 872 | 2907 | 4535.0 | 1.2 | 0.56 | 0.3 | 7.02 | 0.56 | 98.4% | 96.6% | 620 |
| Comparative Example 1 | 0 | 3301 | 4053.0 | 1.2 | 0.23 | 0 | 6.27 | 0.236 | 93% | 91% | 711 |
| Comparative Example 2 | 0 | 3346 | 4050.0 | 1.2 | 0.21 | 0 | 6.27 | 0.262 | 95% | 93% | 714 |
| Comparative Example 3 | 0 | 3196 | 4221.0 | 1.2 | 0.32 | 0.1 | 6.54 | 0.267 | 94% | 91% | 680 |

It can be learned from comparison between Example 1 and Comparative Example 1 or comparison between Example 1 and Comparative Example 2 that the capacity a is made greater than 0 through excess lithiation on the electrochemical apparatus, the capacity retention rate after 200 cycles and the capacity retention rate after 400 cycles of the electrochemical apparatus are significantly increased, but the energy density of the electrochemical apparatus remains basically unchanged. Through comparison between Example 2 and Comparative Example 3, the same results as above can be obtained.

It can be learned from comparison between Examples 1 to 5, as a/b increases from 0.1 to 0.4, the capacity retention rate after 200 cycles and the capacity retention rate after 400 cycles of the electrochemical apparatus increase to some extent, but the energy density of the electrochemical apparatus decreases. It can be learned from comparison between Example 2 and Examples 6 and 7, as a/b increases, the capacity retention rate after 200 cycles and the capacity retention rate after 400 cycles of the electrochemical apparatus increase to some extent, but the energy density of the electrochemical apparatus decreases. In addition, it can be learned from Example 5 or 7, when (c-b)/b > 0.5, energy density loss of the electrochemical apparatus is excessively large, which is undesirable.

Table 2 shows parameters and evaluation results in Examples 1 and 2 and Examples 8 to 10.

**Table 2**

| Number | Capacity a (mAh) | Capacity b (mAh) | Capacity c (mAh) | c/(a+b) | (c-b)/b | a/b | Coating weight for negative electrode (mg/cm²) | Size of lithium plate (mg/cm²) | Capacity retention rate after 200 cycles (%) | Capacity retention rate after 400 cycles (%) | Energy density (J/cm³) |
|---|---|---|---|---|---|---|---|---|---|---|---|
| Example 1 | 334.8 | 3348 | 4051.0 | 1.1 | 0.21 | 0.1 | 6.27 | 0.36 | 97% | 95% | 714 |
| Example 2 | 319.7 | 3197 | 4220.0 | 1.2 | 0.32 | 0.1 | 6.54 | 0.37 | 98% | 96% | 681 |
| Example 8 | 305.8 | 3058 | 4373.0 | 1.3 | 0.43 | 0.1 | 6.78 | 0.38 | 98% | 96.4% | 652 |
| Example 9 | 293.2 | 2932 | 4515.0 | 1.4 | 0.54 | 0.1 | 6.99 | 0.39 | 98.3% | 96.6% | 625 |
| Example 10 | 280.6 | 2806 | 4628.0 | 1.5 | 0.65 | 0.1 | 7.17 | 0.40 | 98.7% | 97% | 598 |

It can be learned from comparison between Examples 1, 2 and 8 to 10, as c/(a+b) increases, the capacity retention rate after 200 cycles and the capacity retention rate after 400 cycles of the electrochemical apparatus increase, and the energy density of the electrochemical apparatus decreases. In addition, as (c-b)/b increases, the capacity retention rate after 200 cycles and capacity retention rate after 400 cycles of the electrochemical apparatus increase, and the energy density of the electrochemical apparatus decreases. When (c-b)/b is greater than or equal to 0.5, the energy density loss of the electrochemical apparatus is excessively large (for example, see Examples 9 and 10), which is undesirable.

The foregoing descriptions are only preferred examples of this application and explanations of the applied technical principles. Persons skilled in the art should understand that the related scope disclosed in this application is not limited to the technical solutions formed by a specific combination of the foregoing technical characteristics, and should also cover other technical solutions formed by any combination of the foregoing technical characteristics or their equivalent characteristics, For example, a technical solution formed by replacement between the foregoing characteristics and technical characteristics having similar functions disclosed in this application.

## Claims

1. An electrochemical apparatus, comprising:

   a positive electrode plate;
   a negative electrode plate; and
   a separator disposed between the positive electrode plate and the negative electrode plate, wherein
   the negative electrode plate comprises a negative electrode current collector and a negative electrode active substance layer disposed on the negative electrode current collector, wherein
   the electrochemical apparatus has a first capacity a in the unit of mAh, the first capacity a is greater than 0, and the first capacity a represents a capacity when a battery that is prepared using the negative electrode plate and a lithium plate as a counter electrode of the negative electrode plate is charged to 2.0 V after the electrochemical apparatus has been discharged from a 100% state of charge (SOC) to 2.5 V.

2. The electrochemical apparatus according to claim 1, wherein the electrochemical apparatus further has a second capacity b in the unit of mAh, the second capacity b represents a capacity when the electrochemical apparatus is discharged from a 100% state of charge to 2.5 V, and the electrochemical apparatus satisfies a relation (1):

$$0 < a/b < 0.5 \qquad (1)$$

   and preferably, $0.05 < a/b < 0.3$.

3. The electrochemical apparatus according to claim 2, wherein the electrochemical apparatus further has a third capacity c in the unit of mAh, the third capacity c represents a capacity when a battery that is prepared using the negative electrode plate and the lithium plate as a counter electrode of the negative electrode plate is charged to 2.0 V and discharged to a 0% state of charge of the battery after the electrochemical apparatus has been discharged from a 100% state of charge to 2.5 V, and the electrochemical apparatus satisfies a relation (2):

$$1.05 < c/(a+b) < 1.6 \qquad (2)$$

   and preferably, $1.11 < c/(a+b) < 1.3$.

4. The electrochemical apparatus according to claim 3, wherein the electrochemical apparatus further satisfies a relation (3):

$$0.03 < (c-b)/b < 0.5 \qquad (3).$$

5. The electrochemical apparatus according to claim 1, wherein a negative electrode active substance in the negative electrode active substance layer comprises at least one of artificial graphite, natural graphite, meso-carbon microbeads, soft carbon, hard carbon, lithium titanate, silicon, a silicon alloy, a silicon-oxygen compound, or a silicon-carbon composite.

6. The electrochemical apparatus according to claim 5, wherein a chemical formula of the silicon-oxygen compound is $SiO_x$, wherein $0.5 \leq x \leq 1.5$.

7. The electrochemical apparatus according to claim 1, wherein a mass percentage of a negative electrode active substance in the negative electrode active substance layer is 80% to 99%.

8. The electrochemical apparatus according to claim 1, wherein a conductive layer is disposed between the negative electrode current collector and the negative electrode active substance layer, and the conductive layer comprises a conductive agent and a binder.

9. The electrochemical apparatus according to claim 8, wherein the conductive agent comprises at least one of carbon black, acetylene black, Ketjen black, graphene, carbon nanotubes, carbon fibers, or carbon nanowires.

10. An electronic apparatus, comprising the electrochemical apparatus according to any one of claims 1 to 9.

Positive electrode

Negative electrode

Battery balance vacancy

Loss of first-cycle efficiency

Charge

Discharge

Reversible lithium vacancy

Reversible lithium vacancy

Loss of first-cycle efficiency

FIG. 1

Positive electrode

Excess lithiation

Negative electrode

Battery balance vacancy

Loss of first-cycle efficiency

Charge

Discharge

Reversible lithium vacancy

Reversible lithium vacancy

Loss of first-cycle efficiency

FIG. 2

10
11
12

FIG. 3

21

20

FIG. 4

21

22

20

FIG. 5

## INTERNATIONAL SEARCH REPORT

| International application No. |
| --- |
| **PCT/CN2020/114670** |

**A.  CLASSIFICATION OF SUBJECT MATTER**

H01M 10/0525(2010.01)i;  H01M 4/36(2006.01)i

According to International Patent Classification (IPC) or to both national classification and IPC

**B.  FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 电池, 负极, 阳极, 锂, 补充, 消耗, 半电池, 对电极, battery, negative electrode, anode, lithium, supplement, consume, half cell, counter electrode

**C.  DOCUMENTS CONSIDERED TO BE RELEVANT**

| Category* | Citation of document, with indication, where appropriate, of the relevant passages | Relevant to claim No. |
| --- | --- | --- |
| X | CN 1595679 A (SONY CORPORATION) 16 March 2005 (2005-03-16)<br>description page 1 lines 10-15, page 3 line 1 pages to 7 line 18, page 12 line 22 to page 14 line 13 | 1-10 |
| X | CN 100479231 C (SONY CORPORATION) 15 April 2009 (2009-04-15)<br>description page 1 paragraph 4, page 2 paragraph 4 to page 7 paragraph 3, page 13 paragraph 2 to page 15 paragraph 2 | 1-10 |
| A | CN 110208716 A (CONTEMPORARY AMPEREX TECHNOLOGY LTD.) 06 September 2019 (2019-09-06)<br>entire document | 1-10 |
| A | JP 2005038720 A (SONY CORP.) 10 February 2005 (2005-02-10)<br>entire document | 1-10 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **02 June 2021** | **11 June 2021** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

<div align="center">

**INTERNATIONAL SEARCH REPORT**
Information on patent family members

</div>

| International application No. |
| --- |
| **PCT/CN2020/114670** |

| Patent document cited in search report | | | Publication date (day/month/year) | Patent family member(s) | | | Publication date (day/month/year) |
| --- | --- | --- | --- | --- | --- | --- | --- |
| CN | 1595679 | A | 16 March 2005 | CN | 100474664 | C | 01 April 2009 |
| | | | | US | 2005079421 | A1 | 14 April 2005 |
| | | | | KR | 20050026348 | A | 15 March 2005 |
| | | | | TW | I249868 | B | 21 February 2006 |
| | | | | TW | 200522409 | A | 01 July 2005 |
| | | | | JP | 2005085633 | A | 31 March 2005 |
| | | | | JP | 3991966 | B2 | 17 October 2007 |
| CN | 100479231 | C | 15 April 2009 | JP | 2005216601 | A | 11 August 2005 |
| | | | | US | 9425441 | B2 | 23 August 2016 |
| | | | | TW | 200603452 | A | 16 January 2006 |
| | | | | KR | 20050077478 | A | 02 August 2005 |
| | | | | CN | 1665050 | A | 07 September 2005 |
| | | | | TW | I274432 | B | 21 February 2007 |
| | | | | EP | 1562250 | A2 | 10 August 2005 |
| | | | | US | 2005191547 | A1 | 01 September 2005 |
| | | | | JP | 4442235 | B2 | 31 March 2010 |
| | | | | EP | 1562250 | B1 | 13 November 2013 |
| CN | 110208716 | A | 06 September 2019 | WO | 2019165796 | A1 | 06 September 2019 |
| | | | | CN | 110208716 | B | 03 July 2020 |
| JP | 2005038720 | A | 10 February 2005 | None | | | |

Form PCT/ISA/210 (patent family annex) (January 2015)